# EUROPEAN PATENT APPLICATION

(11) **EP 1 870 818 A1**
(43) Date of publication of application: **26.12.2007**
(21) Application number: 07105698.0
(22) Date of filing: 05.04.2007
(51) Int. Cl.: G06F 13/364

(54) **Bus arbitration apparatus and method**

(30) Priority: 23.06.2006 KR 20060057126
(71) Applicant: Samsung Electronics Co., Ltd., Suwon-si Gyeonggi-do 443-742 (KR); Yonsei University, Seoul (KR)
(72) Inventor: Jung, Seok-yoon c/o Samsung Advanced Institute of Technology, Gyeonggi-do (KR); Kim, Il-san c/o Yonsei University, Seoul (KR); Park, Jin-hong c/o Yonsei University, Seoul (KR); Han, Tack-don c/o Yonsei University, Seoul (KR)
(74) Representative: Greene, Simon Kenneth

(57) **Abstract**

Provided is a bus arbitration apparatus and method. The bus arbitration apparatus for arbitrating access to a bus for a plurality of masters, requesting the use of a bus to which at least one slave is connected includes a bus use granting unit that outputs a plurality of bus grant signals for granting the use of the bus to the plurality of masters that request the use of the bus at the same time, a simultaneous processing available signal selecting unit that selects a predetermined number of operation instruction signals having a predetermined approximation rate from among a plurality of operation instruction signals that are input from the masters in response to the bus grant signals and instruct the slave to perform an operation, and an operation instructing unit that simultaneously transmits the selected operation instruction signals to the slave through the bus.

## Description

### BACKGROUND OF THE INVENTION

The present invention relates to bus arbitration, and more particularly, to a bus arbitration apparatus and method, by which a plurality of masters can simultaneously instruct an operation of a slave through a bus.

In general, a bus arbiter performs bus arbitration between a plurality of masters connected to a bus. When the plurality of masters requests the use of the bus at the same time, the bus arbiter grants the use of the bus to only one of the masters. Thus, only one of the masters can use the bus at a time according to the arbitration of the bus arbiter.

Due to the principle of bus arbitration, a data processor using a conventional bus structure spends more time in completing data processing as the number of masters that simultaneously request the use of the bus increases. This problem gets worse when the plurality of masters connected to the bus are arranged in the form of a pipeline.

### SUMMARY OF THE INVENTION

The present invention provides a bus arbitration apparatus which, when a plurality of masters desire to use a bus at the same time, sends bus grant signals to the plurality of masters and simultaneously sends a predetermined number of operation instruction signals having a predetermined approximation rate among operation instruction signals received from the plurality of masters in response to the bus grant signals to a slave through the bus.

The present invention also provides a bus arbitration method, by which, when a plurality of masters desire to use a bus at the same time, bus grant signals are sent to the plurality of masters and a predetermined number of operation instruction signals having a predetermined approximation rate among operation instruction signals received from the plurality of masters in response to the bus grant signals are sent to a slave through the bus at the same time.

The present invention also provides a computer-readable recording medium having recorded thereon a computer program, by which, when a plurality of masters desire to use a bus at the same time, bus grant signals are sent to the plurality of masters and a predetermined number of operation instruction signals having a predetermined approximation rate among operation instruction signals received from the plurality of masters in response to the bus grant signals are sent to a slave through the bus at the same time.

According to one aspect of the present invention, there is provided a bus arbitration apparatus for arbitrating access to a bus for a plurality of masters, requesting the use of a bus to which at least one slave is connected. The bus arbitration apparatus includes a bus use granting unit that outputs a plurality of bus grant signals for granting the use of the bus to the plurality of masters that request the use of the bus at the same time, a simultaneous processing available signal selecting unit that selects a predetermined number of operation instruction signals having a predetermined approximation rate from among a plurality of operation instruction signals that are input from the masters in response to the bus grant signals and instruct the slave to perform an operation, and an operation instructing unit that simultaneously transmits the selected operation instruction signals to the slave through the bus.

According to another aspect of the present invention, there is provided a bus arbitration method of arbitrating access to a bus for a plurality of masters requesting the use of a bus to which at least one slave is connected. The bus arbitration method includes (a) outputting a plurality of bus grant signals for granting the use of the bus to the plurality of masters that request the use of the bus at the same time, (b) selecting a predetermined number of operation instruction signals having a predetermined approximation rate from among a plurality of operation instruction signals that are input from the masters in response to the bus grant signals and that instruct the slave to perform an operation, and (c) simultaneously transmitting the selected operation instruction signals to the slave through the bus.

According to another aspect of the present invention, there is provided a computer-readable recording medium having recorded thereon a computer program for implementing a bus arbitration method of arbitrating access to a bus for a plurality of masters requesting the use of a bus to which at least one slave is connected. The bus arbitration method includes (a) outputting a plurality of bus grant signals for granting the use of the bus to the plurality of masters that request the use of the bus at the same time, (b) selecting a predetermined number of operation instruction signals having a predetermined approximation rate from among a plurality of operation instruction signals that are input from the masters in response to the bus grant signals and that instruct the slave to perform an operation, and (c) simultaneously transmitting the selected operation instruction signals to the slave through the bus.

### BRIEF DESCRIPTION OF THE DRAWINGS

The above and other features and advantages of the present invention will become more apparent by describing in detail exemplary embodiments thereof with reference to the attached drawings in which:
FIG. 1 is a reference diagram for explaining the principle of bus arbitration according to the present invention;
FIG. 2 is a block diagram of a bus arbiter according to the present invention;
FIG. 3 is a block diagram of an example of a simultaneous processing applicable signal selecting unit illustrated in FIG. 2 according to a first embodiment of the present invention;
FIG. 4 is a block diagram of another example of the simultaneous processing applicable signal selecting unit illustrated in FIG. 2 according to a second embodiment of the present invention;
FIG. 5 is a flowchart illustrating a bus arbitration method according to a first embodiment of the present invention; and
FIG. 6 is a flowchart illustrating a bus arbitration method according to a second embodiment of the present invention.

### DETAILED DESCRIPTION OF THE INVENTION

Hereinafter, exemplary embodiments of the present invention will be described in detail with reference to the accompanying drawings.

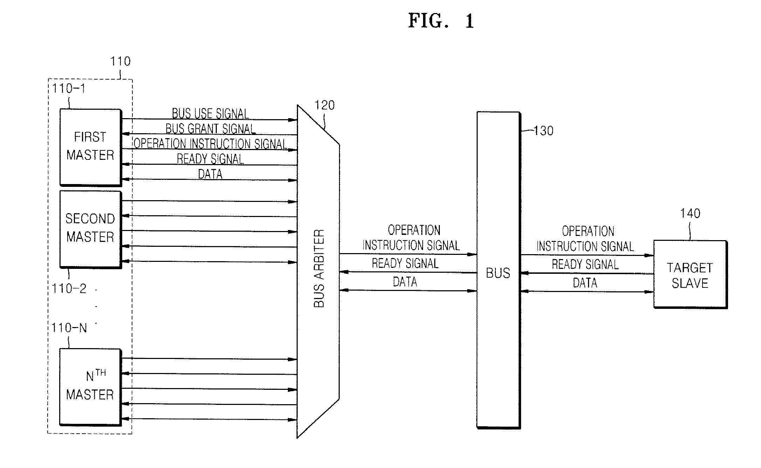

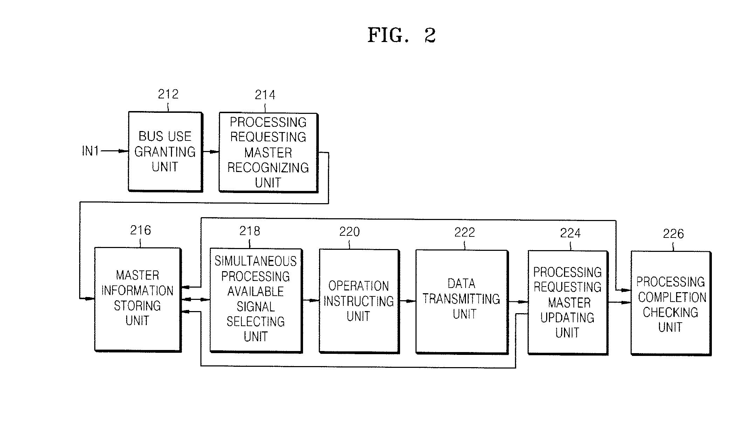

FIG. 1 is a reference diagram for explaining the principle of bus arbitration according to the present invention, and FIG. 2 is a block diagram of a bus arbiter according to the present invention.

For convenience of explanation, it is assumed that a plurality of masters 110 and at least one slave are connected to a bus 130. The master 110 means an object that instructs the slave to perform an operation and the slave means an object that operates according to the instruction of the master 110. Here, the master 110 can exchange data with the slave through the bus 130.

At this time, the plurality of masters 110 are N masters (N is an integer greater than 2), i.e., a first master 110-1 through an N^{th} master 110-N. The reference numeral 110 may indicate the entire masters or one of the masters.

The at least one slaves are M slaves (M is a natural number), i.e., a first slave through an M^{th} slave. The reference numeral 140 indicates a target slave. The target slave 140 means one of the M slaves that the master 10 desires to operate. The target slave 140 may differ according to the master 110. For example, if the first master 110-1 desires to operate a third slave, the target slave 140 of the first master 110-1 is the third slave. Similarly, if a fourth master 110-4 desires to operate a second slave, the target slave 140 of the fourth master 110-4 is the second slave.

For convenience of explanation, it is assumed that all the slaves connected to the bus 130 are implemented with memory devices like memory. In this case, data is stored in the slaves while being matched with addresses. In other words, "the master's 110 instructing an operation of the slave" may mean "the master's 110 notifying the slave in which address of the slave to write data" or "the master's 110 notifying the slave from which address of the slave to read data".

The plurality of masters 110 requests the use of the bus 130 at the same time.

More specifically, each of the masters 110 outputs a bus request signal to a bus arbiter 120 and the bus arbiter 120 receives the bus request signal from each of the masters 110. In other words, the bus arbiter 120 simultaneously receives the plurality of bus request signals. The bus request signal contains information requesting the use of the bus 130.

In this case, a bus use granting unit 212 generates a bus grant signal for each of the bus request signals input through an input terminal IN 1 and outputs the generated bus grant signal to each of the masters 110. In other words, the bus use granting unit 212 grants the use of the bus to all the masters 110. Here, the bus grant signal contains information granting the use of the bus 130. The bus use granting unit 212 may be implemented on or separately from the bus arbiter 120

As such, the operation of the bus arbiter 120 according to the present invention is different from that of a conventional bus arbiter in that the bus arbiter 120 grants the use of the bus 130 to all the masters 110 when the masters 110 request the use of the bus 130 at the same time. In other words, as mentioned above, the conventional bus arbiter outputs a bus grant signal to each of the masters 110 according to a predetermined order when the masters 110 request the use of the bus 130 at the same time.

Upon receipt of the bus grant signal from the bus arbiter 120, the mater 110 outputs an operation instruction signal to the bus arbiter 120. The operation instruction signal contains information about which one of the at least one slaves connected to the bus 130 is the target slave 140 and which operation the target slave 140 is to perform. If the operation instruction signal instructs the target slave 140 to perform the write operation, it may contain information about in which address of the target slave 140 data is to be written. Similarly, if the operation instruction signal instructs the target slave 140 to perform the read operation, it may contain information about from which address of the target slave 140 data is to be read.

A processing requesting master recognizing unit 214 recognizes the masters 110 that input and output operation instruction signals. A master information storing unit 216 stores information about the operation instruction signals of the recognized masters 110. The master information storing unit 216 may be implemented with a register.

In case of N being 15, it is assumed that a first master 110-1 through a fifteenth master 110-15 output bus use signals and only the first master 110-1, a third master 110-3, a fourth master 110-4, an eighth master 110-8, a ninth master 110-9, a tenth master 110-10, a twelfth master 110-12, a thirteenth master 110-13, a fourteenth master 110-14, and a fifteenth master 110-15 output operation instruction signals. The output operation instruction signals will be referred to a first operation instruction signal, a third operation instruction signal, a fourth operation instruction signal, an eighth operation instruction signal, a ninth operation instruction signal, a tenth operation instruction signal, a twelfth operation instruction signal, a thirteenth operation instruction signal, a fourteenth operation instruction signal, and a fifteenth operation instruction signal.

In this case, the master information storing unit 216 stores information about the first operation instruction signal, the third operation instruction signal, the fourth operation instruction signal, the eighth operation instruction signal, the ninth operation instruction signal, the tenth operation instruction signal, the twelfth operation instruction signal, the thirteenth operation instruction signal, the fourteenth operation instruction signal, and the fifteenth operation instruction signal.

The simultaneous processing available signal selecting unit 218 selects a predetermined number of operation instruction signals having a predetermined approximation rate among the operation instruction signals input to the processing requesting master recognizing unit 214. In the above example, the simultaneous processing available signal selecting unit 218 selects a predetermined number of operation instruction signals having a predetermined approximation rate among the first operation instruction signal, the third operation instruction signal, the fourth operation instruction signal, the eighth operation instruction signal, the ninth operation instruction signal, the tenth operation instruction signal, the twelfth operation instruction signal, the thirteenth operation instruction signal, the fourteenth operation instruction signal, and the fifteenth operation instruction signal.

Hereinafter, "the predetermined number" will be described in detail. Here, the predetermined number is equal to or less than a result of dividing the data width of the bus 130 by the basic unit of the width of data that can be input to and output from the slave. It is assumed that the data width is A bits and the basic unit is B bits. In other words, data written to or read from the slave is composed of B bits.

The assumption that the basic unit is B bits is applied to all slaves. Here, the expression "the basic unit" is used because, since the plurality of data can be transmitted through the bus 130 at the same time, the number of data that can be input to and output from the slave at the same time may also be plural. Even when the number of data that can be input to and output from the slave at the same time is 3, "the predetermined number" is less than a result of dividing A bits by B bits instead of a result of dividing A bits by 3B bits.

Simultaneous transmission of a plurality of data through the bus 130 can be achieved when A bits exceed B bits. It is preferable that A = k * B (k is an integer that is greater than 2). Such a relationship is also applied to the above example.

Here, k may be calculated by a number calculating unit (not shown) or the simultaneous processing available signal selecting unit 218 prior to the operation of the bus use granting unit 212. In other words, the number calculating unit (not shown) or the simultaneous processing available signal selecting unit 218 recognizes A and B and determines the quotient of A divided by B to be k.

In this case, "the predetermined number" is less than k.

More specifically, if the simultaneous processing available signal selecting unit 218 selects the predetermined number of operation instruction signals without considering an approximation rate to be described below, "the predetermined number" is k. On the other hand, if the simultaneous processing available signal selecting unit 218 selects "a predetermined number of operation instruction signals having a predetermined approximation rate", "the predetermined number" may be equal to or less than k.

A value calculated by the number calculating unit (not shown) or the simultaneous processing available signal selecting unit 218 is not "the predetermined number", but k. "The predetermined number" is not obtained by "calculation", but is determined when the simultaneous processing available signal selecting unit 218 completes a selection.

Hereinafter, "the predetermined approximation rate" will be described in detail.

The simultaneous processing available signal selecting unit 218 may select a plurality of operation instruction signals "instructing the same operation" among all the operation instruction signals input to the processing requesting master recognizing unit 214. In the above example, if each of the first operation instruction signal, the fourth operation instruction signal, the eighth operation instruction signal, the ninth operation instruction signal, the thirteenth operation instruction signal, and the fourteenth operation instruction signal instructs a write operation and each of the third operation instruction signal, the tenth operation instruction signal, the twelfth operation instruction signal, and the fifteenth operation instruction signal instructs a read operation, the simultaneous processing available signal selecting unit 218 may select "the first operation instruction signal, the fourth operation instruction signal, the eighth operation instruction signal, the ninth operation instruction signal, the thirteenth operation instruction signal, and the fourteenth operation instruction signal" or "the third operation instruction signal, the tenth operation instruction signal, the twelfth operation instruction signal, and the fifteenth operation instruction signal".

The simultaneous processing available signal selecting unit 218 may select a plurality of operation instruction signals that are "destined to the same target slave 140" among all the operation instruction signals input to the processing requesting master recognizing unit 214. In the above example, if the target slave 140 of the first operation instruction signal, the fourth operation instruction signal, the eighth operation instruction signal, and the ninth operation instruction signal is a first slave, the target slave 140 of the third operation instruction signal, the twelfth operation instruction signal, and the fifteenth operation instruction signal is a third slave, and the target slave 140 of the thirteenth operation instruction signal and the fourteenth operation instruction signal is a fourth slave, the simultaneous processing available signal selecting unit 218 may select "the first operation instruction signal, the fourth operation instruction signal, the eighth operation instruction signal, and the ninth operation instruction signal", "the third operation instruction signal, the twelfth operation instruction signal, and the fifteenth operation instruction signal", or "the thirteenth operation instruction signal and the fourteenth operation instruction signal".

The simultaneous processing available signal selecting unit 218 may select a plurality of operation instruction signals that are "destined to adjacent addresses". More specifically, the simultaneous processing available signal selecting unit 218 may select k operation instruction signals corresponding to k addresses from among a plurality of addresses for which a plurality of operation instruction signals that are "destined to the same target slave 140" instruct the same operation, in order that an address that approximates to one of the plurality of addresses is included first in the k addresses. Here, the one of the plurality of addresses may be set at random.

In the above example, if "k" is 3 and a ninth address (a p^{th} address may be an address among addresses of the target slave 140 in which a p^{th} operation instruction signal instructs the target slave 140 to perform a write operation or from which the p^{th} operation instruction signal instructs the target slave 140 to perform a read operation), a first address, and an eighth address sequentially approximate to a fourth address, the simultaneous processing available signal selecting unit 218 selects "the fourth operation instruction signal, the ninth operation instruction signal, and the first operation instruction signal". Although the approximation rate of each address is considered based on the fourth address, it may be considered based on the first address, the eighth address, or the ninth address. In this paragraph, "the predetermined number" is 3.

Similarly, in the above example, if k is 2 and the third address and the fifteenth address sequentially approximate to the twelfth address, the simultaneous processing available signal selecting unit 218 selects "the twelfth operation instruction signal and the third operation instruction signal". Although the approximation rate of each address is considered based on the twelfth address, it may be considered based on the third address or the fifteenth address. In this paragraph, "the predetermined number" is 2.

The simultaneous processing available signal selecting unit 218 outputs "a predetermined number of operation instruction signals" selected according to this principle to an operation instructing unit 220.

The operation instructing unit 220 simultaneously transmits "a predetermined number of operation instruction signals" received from the simultaneous processing available signal selecting unit 218 to the target slave 140 through the bus 130. The operation instructing unit 220 may be implemented on or separately from the bus arbiter 120.

If the target slave 140 receiving "a predetermined number of operation instruction signals" is ready for performing the operation instructed by the operation instruction signals, it transmits a ready signal to a data transmitting unit 222 through the bus 130. In this case, the data transmitting unit 222 transmits the received ready signal to the master 110. In this way, the master 110 receiving the ready signal recognizes that it can exchange data with the target slave 140. The data transmitting unit 222 may be implemented on the bus arbiter 120.

The data transmitting unit 222 may not be implemented on the bus arbiter 120 according to the present invention. In this case, if the target slave 140 receiving "a predetermined number of operation instruction signals" is ready for performing the operation instructed by the operation instruction signals, it transmits the ready signal to the master 110 through the bus 130.

Once the ready signal is transmitted to the master 110, the master 110 transmits corresponding data to the target slave 140 through the bus 130.

In the above example, if the simultaneous processing available signal selecting unit 218 selects "the fourth operation instruction signal, the ninth operation instruction signal, and the first operation instruction signal", the first master 110-1, the fourth master 110-4, and the ninth master 110-9 receiving the ready signal may write data in 3 addresses of the first slave at the same time.

A processing requesting master updating unit 224 eliminates information about an operation instruction signal corresponding to the generated ready signal from the master information storing unit 216.

A processing completion checking unit 226 checks if there remains information about an operation instruction signal in the master information storing unit 216. If so, the processing completion checking unit 226 instructs the simultaneous processing available signal selecting unit 218 to perform the operation again.

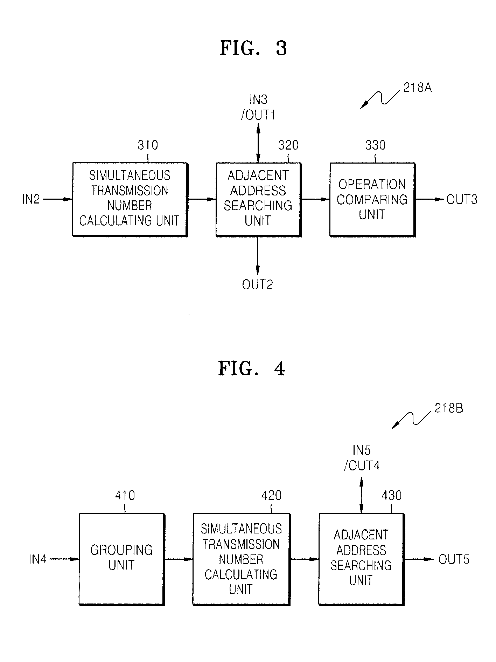

FIG. 3 is a block diagram of an example 218A of the simultaneous processing available signal selecting unit 218 illustrated in FIG. 2 according to a first embodiment of the present invention. The simultaneous processing available signal selecting unit 218A includes a simultaneous transmission number calculating unit 310, an adjacent address searching unit 320, and an operation comparing unit 330.

The simultaneous transmission number calculating unit 310 recognizes A and B and calculates k using A and B. Here, A and B are input to the simultaneous transmission number calculating unit 310 through an input terminal IN 2.

The adjacent address searching unit 320 analyzes information stored in the master information storing unit 216 to recognize a maximum number of k operation instruction signals corresponding to a maximum number of k addresses among a plurality of addresses corresponding to a plurality of operation instruction signals that are "destined to the same target slave 140", in order that an address that approximates to one of the plurality of addresses is included first in the k addresses. Here, an input terminal IN 3 is included in the adjacent address searching unit 320 and an output terminal OUT 1 is included in the master information storing unit 216.

The adjacent address searching unit 320 determines a maximum number of k operation instruction signals to be "operation instruction signals selected by the simultaneous processing available signal selecting unit 218A" and outputs the k operation instruction signals to the operation instructing unit 220 through an output terminal OUT 2. In this case, the operation comparing unit 330 does not operate.

The operation comparing unit 330 selects at least one operation instruction signals instructing the same operation as an operation instructed by one of the k operation instruction signals and outputs the selected operation instruction signals to the operation instructing unit 220 through an output terminal OUT 3. In this case, the adjacent address searching unit 320 does not output the k operation instruction signals to the operation instructing unit 220 through the output terminal OUT 2.

FIG. 4 is a block diagram of another example 218B of the simultaneous processing applicable signal selecting unit 218 illustrated in FIG. 2 according to a second embodiment of the present invention. The simultaneous processing applicable signal selecting unit 218B includes a grouping unit 410, a simultaneous transmission number calculating unit 420, and an adjacent address searching unit 430.

The grouping unit 410 generates at least one groups according to the target device 140 whose operation the operation instruction signals recognized by the processing requesting master recognizing unit 214 are to instruct and the operation instructed by the recognized operation instruction signals. At this time, the operation instruction signals recognized by the processing requesting master recognizing unit 214 are input through an input terminal IN 4.

The simultaneous transmission number calculating unit 420 recognizes A and B and calculates k using A and B.

The adjacent address searching unit 430 analyzes information stored in the master information storing unit 216 to select "a predetermined number of operation instruction signals corresponding to a predetermined number of addresses among a plurality of addresses corresponding to operation instruction signals included in one of the groups generated by the grouping unit 410 in order that an address that approximates to one of the plurality of addresses is included first in the predetermined number of addresses. An input terminal IN 5 is included in the adjacent address searching unit 320 and an output terminal OUT 4 is included in the master information storing unit 216. The adjacent address searching unit 430 outputs the selected operation instruction signals to the operation instructing unit 220 through the output terminal OUT 5.

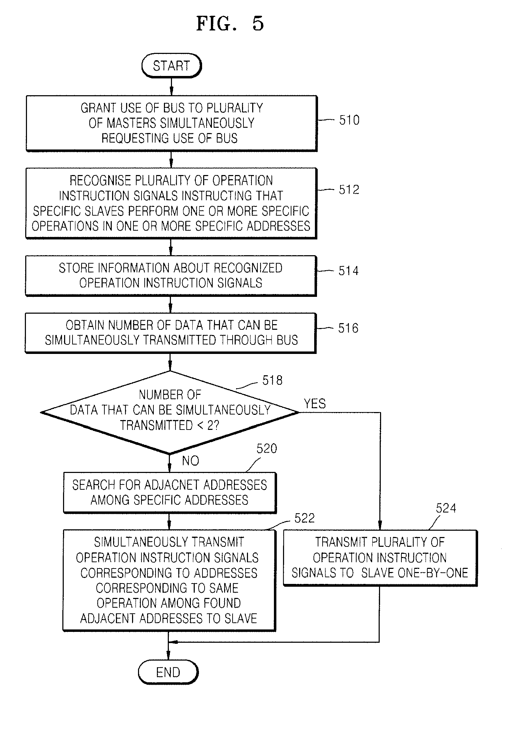

FIG. 5 is a flowchart illustrating a bus arbitration method according to a first embodiment of the present invention, in which when a plurality of masters desire to use a bus at the same time, bus grant signals are sent to all the masters and a predetermined number of operation instruction signals having a predetermined approximation rate among operation instruction signals received from the masters in response to the bus grant signals are transmitted to a slave through the bus at the same time.

The bus use granting unit 212 grants the use of the bus 130 to all the masters 110 that request the use of the bus 130 at the same time in operation 510. The processing requesting master recognizing unit 214 recognizes masters that generate operation instruction signals in operation 512.

In operation 514, the master information storing unit 216 stores information about the operation instruction signals recognized in operation 512.

The simultaneous transmission number calculating unit 310 obtains k in operation 516 and determines whether k is less than 2 in operation 518.

If k is greater than 2, the adjacent address searching unit 320 searches among the operation instruction signals recognized in operation 512 for a maximum number of k operation instruction signals corresponding to a maximum number of k addresses among a plurality of addresses corresponding to a plurality of operation instruction signals that are destined to the same target device in order that an address that approximates to one of the plurality of addresses is included first in the k addresses, in operation 520.

The operation comparing unit 330 selects at least one operation instruction signals instructing the same operation as an operation instructed by one of the operation instruction signals found in operation 520 and the operation instructing unit 220 simultaneously transmits the selected operation instruction signals to the target slave 140 through the bus 130 in operation 522.

If k is less than 2, the operation instruction signals recognized in operation 512 are transmitted to the target slave 140 according to a conventional arbitration scheme. In other words, if k is less than 2, the bus arbiter 120 transmits the operation instruction signals recognized in operation 512 to the target slave 140 through the bus 130 one-by-one in operation 524.

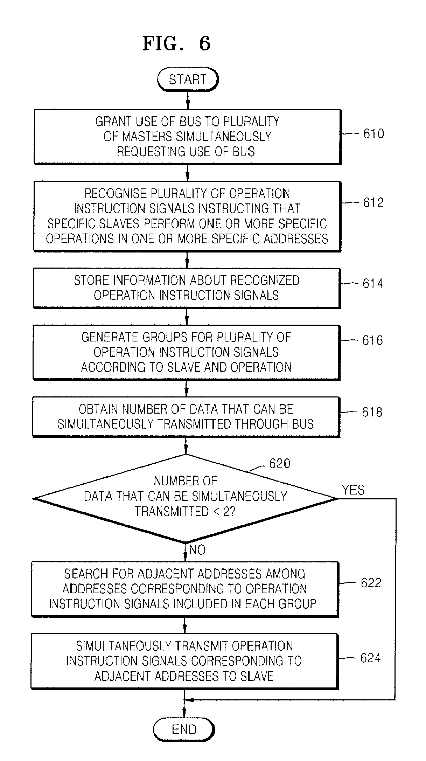

FIG. 6 is a flowchart illustrating a bus arbitration method according to a second embodiment of the present invention, in which when a plurality of masters desire to use a bus at the same time, bus grant signals are sent to all the masters and a predetermined number of operation instruction signals having a predetermined approximation rate among operation instruction signals received from the masters in response to the bus grant signals are transmitted to a slave through the bus at the same time.

The bus use granting unit 212 grants the use of the bus 130 to all the masters 110 that request the use of the bus 130 at the same time in operation 610. The processing requesting master recognizing unit 214 recognizes masters that generate operation instruction signals in operation 612.

In operation 614, the master information storing unit 216 stores information about the operation instruction signals recognized in operation 612.

The grouping unit 410 generates at least one groups for the operation instruction signals recognized in operation 612 according to the target device 140 whose operation the recognized operation instruction signals are to instruct and the operation instructed by the recognized operation instruction signals in operation 616.

The simultaneous transmission number calculating unit 420 obtains k in operation 618 and determines whether k is less than 2 in operation 620.

If k is greater than 2, the adjacent address searching unit 430 searches for a predetermined number of operation instruction signals corresponding to a predetermined number of addresses among a plurality of addresses corresponding to a plurality of operation instruction signals included in one of the groups generated in operation 616 in order that an address that approximates to one of the plurality of addresses is included first in a predetermined number of addresses, in operation 622.

In operation 624, the operation instructing unit 220 simultaneously transmits the operation instruction signals selected in operation 622 to the target slave 140.

Meanwhile, the present invention can be embodied as code that is readable by a computer on a computer-readable recording medium. The computer-readable recording medium includes all kinds of recording devices storing data that is readable by a computer system. Examples of the computer-readable recording medium include read-only memory (ROM), random access memory (RAM), CD-ROMs, magnetic tapes, floppy disks, optical data storage devices, and carrier waves such as transmission over the Internet. The computer readable recording medium can also be distributed over network coupled computer systems so that the computer readable code is stored and executed in a distributed fashion.

As described above, according to the present invention, a plurality of masters can instruct an operation of a slave through a bus at the same time, thereby maximizing the amount of data transmission through the bus and thus maximizing the data processing speed of a data processor using a bus structure. Therefore, according to the present invention, it is possible to minimize rapid degradation in the data processing speed of a data processor having a bus structure in which a plurality of masters connected to a bus are arranged in the form of a pipeline.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A bus arbitration apparatus for arbitrating access to a bus (130) for a plurality of masters (110) requesting the use of a bus (130) to which at least one slave (140) is connected, the bus arbitration apparatus comprising:
a bus use granting unit (212) for outputting a plurality of bus grant signals for granting the use of the bus to the plurality of masters that request the use of the bus at the same time;
a simultaneous processing available signal selecting unit (218) for selecting a predetermined number of operation instruction signals having a predetermined approximation rate from among a plurality of operation instruction signals that are input from the masters in response to the bus grant signals and instruct the slave to perform an operation; and
an operation instructing unit (220) for simultaneously transmitting the selected operation instruction signals to the slave through the bus.

2. The bus arbitration apparatus of claim 1, wherein the predetermined number is equal to or less than a result of dividing the data width (A) of the bus (130) by the basic unit (B) of the width of data that can be input to and output from the slave.

3. The bus arbitration apparatus of claim 1 or 2, wherein the simultaneous processing available signal selecting unit (218) is adapted to select the plurality of operation instruction signals instructing the performance of the same operation.

4. The bus arbitration apparatus of claim 1, 2 or 3, wherein the simultaneous processing available signal selecting unit (218) is adapted to select the plurality of operation instruction signals that are destined to the same slave.

5. The bus arbitration apparatus of claim 4, wherein the operation instruction signal instructs a write operation or a read operation at an address of the slave (140), and the simultaneous processing available signal selecting unit (218) is adapted to select the predetermined number of operation instruction signals corresponding to the predetermined number of addresses among the plurality of addresses corresponding to the plurality of operation instruction signals destined to the same slave, in order that an address that approximates to one of the plurality of addresses is included first in the predetermined number of addresses.

6. A bus arbitration method of arbitrating access to a bus (130) for a plurality of masters (110)requesting the use of a bus to which at least one slave (140) is connected, the bus arbitration method comprising:
(a) outputting a plurality of bus grant signals for granting the use of the bus to the plurality of masters that request the use of the bus at the same time;
(b) selecting a predetermined number of operation instruction signals having a predetermined approximation rate from among a plurality of operation instruction signals that are input from the masters in response to the bus grant signals and that instruct the slave to perform an operation; and
(c) simultaneously transmitting the selected operation instruction signals to the slave through the bus.

7. The bus arbitration method of claim 6, wherein the predetermined number of operation instruction signals is equal to or less than a result of dividing the data width (A) of the bus by the basic unit (B) of the width of data that can be input to and output from the slave.

8. The bus arbitration method of claim 6 or 7, wherein the step (b) of selecting comprises selecting the plurality of operation instruction signals instructing the performance of the same operation.

9. The bus arbitration method of claim 6, 7 or 8, wherein the step (b) of selecting comprises selecting the plurality of operation instruction signals that are destined to the same slave.

10. The bus arbitration method of claim 9, wherein the operation instruction signal instructs a write operation or a read operation at an address of the slave, and the step (b) of selecting comprises selecting the predetermined number of operation instruction signals corresponding to the predetermined number of addresses among the plurality of addresses corresponding to the plurality of operation instruction signals that are destined to the same slave, in order that an address that approximates to one of the plurality of addresses is included first in the predetermined number of addresses.

11. A computer program comprising computer program code means adapted to perform all of the steps of any of claims 6 to 10 when said program is run on a computer.

12. A computer program according to claim 11 embodied on a computer readable medium.
